# EUROPÄISCHE PATENTSCHRIFT

(11) **EP 1 383 288 B1**
(45) Veröffentlichungstag und Bekanntmachung des Hinweises auf die Patenterteilung: **26.11.2008**
(21) Anmeldenummer: 03015193.0
(22) Anmeldetag: 04.07.2003
(51) Int. Cl.: H04L 27/22, H04L 27/38

(54) **Verfahren und Vorrichtung zum Messen der Symbolrate eines digital modulierten Hochfrequenzsignals**
Method and apparatus for measuring the symbol rate of a digitally modulated, high frequency signal
Procédé et dispositif pour mesurer le débit de symboles d'un signal à fréquence élevée numériquement modulée

(30) Priorität: 16.07.2002 DE 10232195
(43) Veröffentlichungstag der Anmeldung: 21.01.2004
(73) Patentinhaber: Rohde & Schwarz GmbH & Co. KG, 81671 München (DE)
(72) Erfinder: Megow, Holger, 12555 Berlin (DE)
(74) Vertreter: Körfer, Thomas

(56) Entgegenhaltungen:
- EP-A- 0 991 236
- EP-A- 1 096 748
- US-B1- 6 263 028

## Beschreibung

Die Erfindung betrifft ein Verfahren und eine Vorrichtung zum Messen der Symbolrate eines digital modulierten Hochfrequenzsignals.

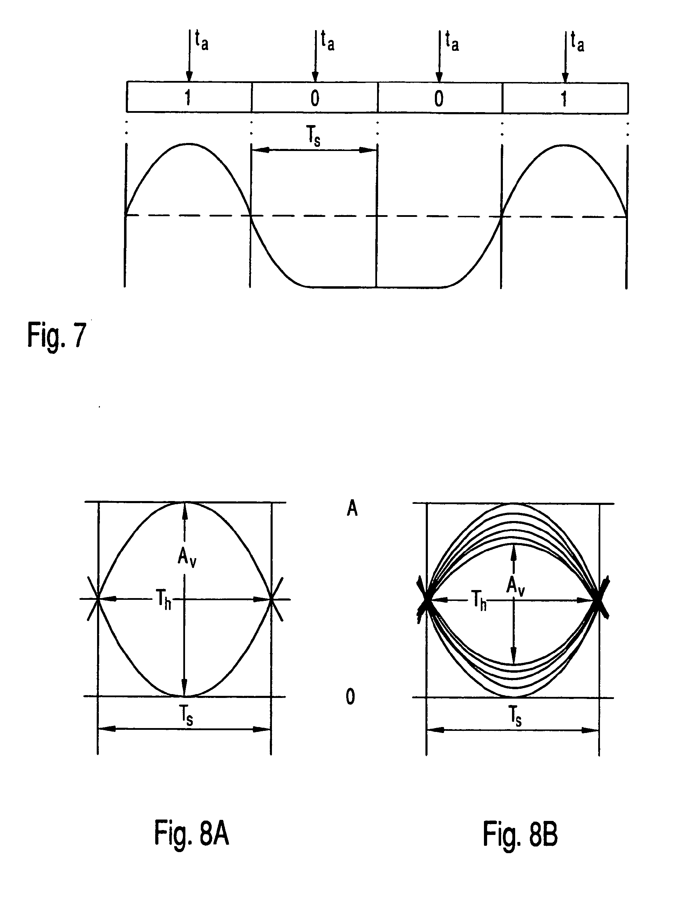

Es besteht vielfach das Bedürfnis der Messung der Symbolrate eines digital modulierten Hochfrequenzsignals. In J. Göbel, "Kommunikationstechnik", ISBN 3-7785-3904-3, 1999, Seiten 234-236, wird vorgeschlagen, zur Bestimmung der Symbolrate das Augendiagramm (Eye Pattern, Eye Diagram) zu benutzen. Diese Vorgehensweise wird nachfolgend kurz anhand der Fig. 7, Fig. 8A und Fig. 8B erläutert.

Fig. 7 zeigt ein Beispiel für ein Basisbandsignal. Die Symbollänge ist mit T_{S} gekennzeichnet. In der Mitte der Symbolperioden befinden sich die Abtastzeitpunkte tₐ. Beispielhaft dargestellt ist die Symbolsequenz "1001".

Fig. 8A zeigt das Augendiagramm eines rauschfreien, idealen Basisbandsignals. Für ein rauschfreies Signal liegen die Nulldurchgänge exakt an der gleichen Position und aus der horizontalen Augenöffnung Tₕ läßt sich die Symbolrate f_{S} = 1/T_{S} = 1/Tₕ exakt bestimmen. Wenn das Signal jedoch rauschbehaftet ist und zusätzlich noch mit einem Jitter beaufschlagt ist, wird die horizontale Augenöffnung Tₕ deutlich kleiner und der Mittelwert der Nulldurchgänge läßt sich nur noch ungefähr abschätzen, so daß eine exakte Bestimmung der Symbolrate nicht mehr möglich ist. Fig. 8B zeigt die Problematik. Die in der Praxis auftretenden Signalfluktuationen sind erheblich größer als in Fig. 8B dargestellt, so daß die Auswertung des Augendiagramms allenfalls eine grobe Abschätzung der Symbolrate erlaubt.

Grundsätzlich könnte auch daran gedacht werden, das Spektrum des Zwischenfrequenzsignals zur Bestimmung der Symbolrate heranzuziehen. Dies scheitert jedoch an den üblicherweise zur Begrenzung der Bandbreite verwendeten Cosinus-Filtern.

Ein solches Verfahren ist im Dokument US-B1-6 263 028 beschrieben.

Der Erfindung liegt die Aufgabe zugrunde, ein Verfahren und eine Vorrichtung zum Messen der Symbolrate eines digital modulierten Hochfrequenzsignals zu schaffen, das bzw. die mit geringem Aufwand eine zuverlässige Erfassung der Symbolrate erlaubt.

Die Aufgabe wird bezüglich des Verfahrens durch die Merkmale des Anspruchs 1 und bezüglich der Vorrichtung durch die Merkmale des Anspruchs 8 gelöst.

Erfindungsgemäß wird vorgeschlagen, das in der Regel durch einen I/Q-Demodulator erzeugte Basisbandsignal einer Amplitudendemodulation zu unterwerfen und das Spektrum des amplitudendemodulierten Basisbandsignals zu analysieren. Dieses Spektrum weist einen Spitzenwert (Peak) an der Frequenzposition der Symbolrate auf, so daß die Symbolrate aus dem Spektrum relativ exakt abgelesen werden kann.

Die Unteransprüche betreffen vorteilhafte Weiterbildungen der Erfindung.

Es kann entweder nur die Inphase-Komponente I oder nur die Quadraturphase-Komponente Q des I/Q-Demodulators ausgewertet werden. Zur Verbesserung des Signal/Rausch-Abstands kann es jedoch vorteilhaft sein, sowohl die Inphase-Komponente I als auch die Quadraturphase-Komponente Q der Amplitudendemodulation zu unterwerfen und beide Spektren auszuwerten. Dabei können die Spektren entweder zur Verringerung des Signal/Rausch-Abstands überlagert werden oder es können die Symbolraten aus beiden Spektren getrennt ausgewertet werden und der Mittelwert beider Messungen erfaßt werden.

Die Analyse des Spektrums kann entweder durch einen üblichen Spektrumanalysator oder durch Anwenden einer Fourier-Analyse des digitalisierten Signals erfolgen.

Ausführungsbeispiele der Erfindung werden nachfolgend unter Bezugnahme auf die Zeichnung näher beschrieben. In der Zeichnung zeigen:
- Fig. 1: ein erstes Ausführungsbeispiel der erfindungsgemäßen Meßvorrichtung;
- Fig. 2: ein zweites Ausführungsbeispiel einer erfindungsgemäßen Meßvorrichtung;
- Fig. 3: ein drittes Ausführungsbeispiel einer erfindungsgemäßen Meßvorrichtung;
- Fig. 4: ein viertes Ausführungsbeispiel einer erfindungsgemäßen Meßvorrichtung;
- Fig. 5: ein Beispiel des analysierten Spektrums;
- Fig. 6: das in Fig. 5 dargestellte Spektrum in einer gespreizten Darstellung (Zoom);
- Fig. 7: eine schematische Darstellung eines Basisbandsignals;
- Fig. 8A: die Auswertung der Symbolrate an einem Augendiagramm entsprechend dem Stand der Technik bei einem unverrauschten Signal; und
- Fig. 8B: die Auswertung der Symbolrate an einem Augendiagramm entsprechend dem Stand der Technik bei einem Signal, das verrauscht ist und mit einem Jitter beaufschlagt ist.

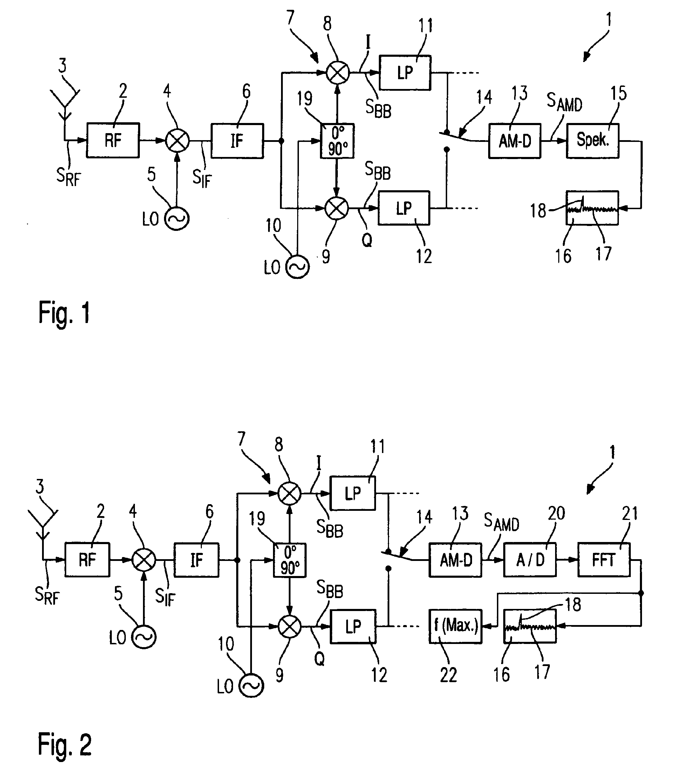

Fig. 1 zeigt ein erstes Ausführungsbeispiel einer erfindungsgemäßen Vorrichtung 1 zur Durchführung des erfindungsgemäßen Verfahrens. Die meisten der in Fig. 1 dargestellten Komponenten sind Bestandteile eines konventionellen Empfängers. Die einzige zusätzliche Komponente ist ein Analog-Demodulator, der durch einfache Bauelemente, beispielsweise eine Diode und wenige weitere Bauelemente gebildet werden kann. Weiterhin ist zur Durchführung des Verfahrens lediglich ein konventioneller Spektrumanalysator oder ein Rechner mit einem üblichen Programm zu einer schnellen Fourier-Transformation (FFT, East Eourier Transform) erforderlich.

Fig. 1 zeigt einen Empfänger mit einem Hochfrequenzteil 2, das das Hochfrequenzsignal S_{RF} beispielsweise von einer Antenne 3 empfängt, verstärkt und vorselektiert. In einem ersten Mischer 4 wird das verstärkte und vorselektierte Hochfrequenzsignal S_{RF} mit dem Signal eines ersten lokalen Oszillators 5 gemischt und es entsteht in üblicher Weise das Zwischenfrequenzsignal S_{IF}. Das Zwischenfrequenzsignal S_{IF} wird in einem Zwischenfrequenzteil 6 in üblicher Weise verstärkt und weiter selektiert. In einem nachgeschalteten I/Q-Demodulator 7 wird das Zwischenfrequenzsignal S_{IF} phasenkohärent demoduliert. Dabei entsteht die Inphase-Komponente I und die Quadraturphase-Komponente Q des komplexen Basisbandsignals S_{BB}.

Der I/Q-Demodulator umfaßt in üblicher Weise einen zweiten Mischer 8 und einen dritten Mischer 9, dem jeweils das Zwischenfrequenzsignal S_{IF} zugeführt wird. Des weiteren wird dem Mischer 8 das Signal eines zweiten lokalen Oszillators 10 ohne Phasenverschiebung zugeführt, während dem anderen Mischer 9 das Signal des zweiten lokalen Oszillators 10 mit einer relativen Phasenverschiebung von 90°, die in einem Phasenschieber 19 erzeugt wird, zugeführt wird. Den Mischern 8 und 9 sind üblicherweise Tiefpässe 11 und 12 zur Selektion der I-und Q-Symbole nachgeschaltet.

Bei den vorstehend beschriebenen Komponenten handelt es sich um Komponenten eines üblichen Empfängers zum Empfang eines digital modulierten Signals. Die I-Komponente und Q-Komponente werden in dem Empfänger zur Rekonstruktion der Modulationssymbole in üblicher Weise beispielsweise durch eine Decodierung, Entschachtelung, Fehlererkennung und Fehlerkorrektur usw. weiter verarbeitet, was in Fig. 1 durch die gestrichelten Linien angedeutet ist. Viele Empfänger verfügen über separate Ausgänge der I-Komponente und Q-Komponente des I/Q-Demodulators 7 bzw. solche separate Ausgänge können leicht geschaffen werden. Diese Ausgänge können zur Durchführung des erfindungsgemäßen Verfahrens benutzt werden. An einem dieser Ausgänge wird erfindungsgemäß ein Amplituden-Demodulator 13 angeschlossen. Der Amplituden-Demodulator 13 verfügt im einfachsten Fall über nur wenige Bauelemente, wobei zumindest ein Bauelement eine nichtlineare Kennlinie aufweist. Üblicherweise wird hierzu eine Diode verwendet. Im dargestellten Ausführungsbeispiel ist der Amplituden-Demodulator 13 über eine Umschalteinrichtung 14 wahlweise mit dem I-Ausgang oder dem Q-Ausgang des I/Q-Demodulators 7 verbindbar.

Ein dem Amplituden-Demodulator 13 nachgeschalteter Spektrumanalysator 15 analysiert das Spektrum des amplitudendemodulierten Basisbandsignals S_{AMD} am Ausgang des Amplituden-Demodulators 13. Beim in Fig. 1 dargestellten Ausführungsbeispiel handelt es sich um einen üblichen Spektrumanalysator, bei welchem innerhalb einer vorgegebenen Sweep-Zeit ein Sweep-Filter zwischen einer Startfrequenz und einer Stopfrequenz durchgesweept wird. In dem Spektrum 17 des amplitudendemodulierten Basisbandsignals S_{AMD} zeigt sich ein Spitzenwert (Peak) 18 an der Frequenzposition der Symbolrate f_{S}. Das Spektrum wird auf einem Display 16 dargestellt.

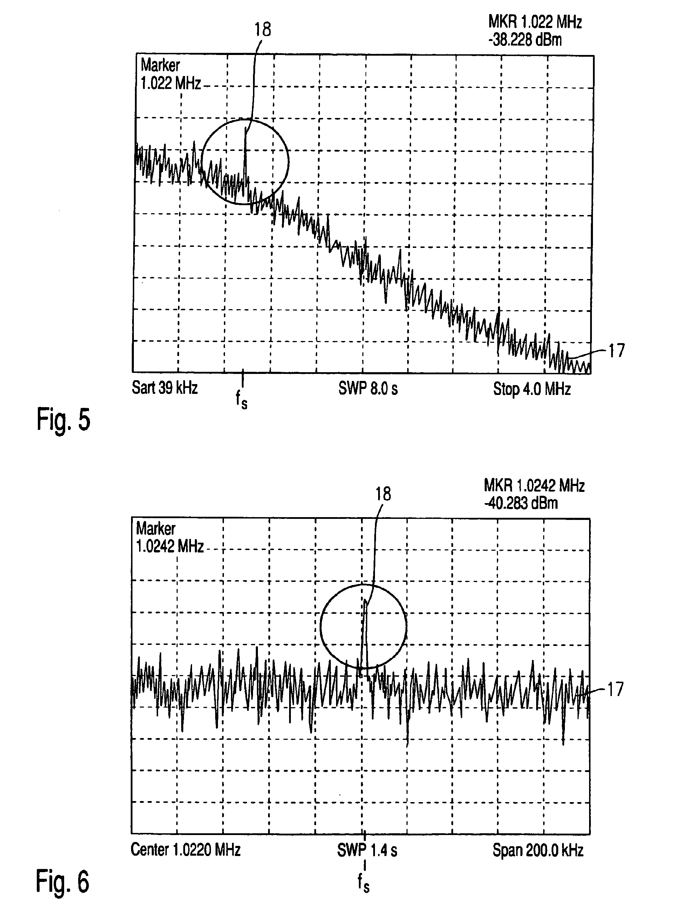

Fig. 5 zeigt ein Beispiel eines solchen Spektrums, das mit einem Spektrumanalysator 15 aufgenommen wurde. Die Startfrequenz und die Stopfrequenz sind unkritisch und betragen im Ausführungsbeispiel 39 kHz bzw. 4 MHz. Es ist lediglich sicherzustellen, daß die Stopf requenz größer als die Bandbreite des Signals ist. Die Sweep-Zeit beträgt für das in Fig. 5 dargestellte Ausführungsbeispiel 8 sec. Deutlich erkennbar ist der Spitzenwert (Peak) 18 in dem Spektrum 17. Der bei Spektrumanalysatoren üblicherweise vorhandene Marker kann an die Position dieses Spitzenwerts (Peaks) gestellt werden und die zugehörige Frequenz, welche der gesuchten Symbolrate fₛ entspricht, kann abgelesen werden. Im in Fig. 5 dargestellten Beispiel kann die Symbolrate fₛ zu 1,022 MHz ermittelt werden.

Üblicherweise verfügen Spektrumanalysatoren über eine Spreiz(Zoom)-Funktion. Fig. 6 zeigt das gespreizte Spektrum 17 im Bereich des Peaks 18. Der Marker kann hier noch genauer positioniert werden, so daß die Symbolrate im dargestellten Beispiel zu 1,0242 MHz ermittelt werden kann.

Das erfindungsgemäße Verfahren kann mit nur geringem Zusatzaufwand durchgeführt werden, wenn ein Empfänger mit I/Q-Ausgang und ein handelsüblicher Spektrumanalysator 15 vorhanden sind. Zusätzlich erforderlich ist lediglich ein Amplituden-Demodulator, der mit wenig Bauelementen aufgebaut werden kann. Ohne jeglichen Optimierungsaufwand kann die Symbolrate noch bei einem Signal/Rausch-Abstand von 3 dB problemlos ermittelt werden. Durch Optimierung der Filter des Empfängers ist sogar noch eine Detektion der Symbolrate bei einem Signal/Rausch-Abstand von 0 dB möglich.

Das vorstehend beschriebene Verfahren ermöglicht die unmittelbare Bestimmung der Symbolrate für alle nicht frequenzumtastenden Modulationsverfahren, also beispielsweise alle PSK (Phase Shift Keying)- und QAM (Quadrature Amplitude Modulation)-Verfahren. Das erfindungsgemäße Verfahren eignet sich grundsätzlich auch für frequenzumtastende Verfahren, also beispielsweise FSK (Frequency Shift Keying)-, GMSK- und Offset-QPSK (Quadrature Phase Shift Keying)-Verfahren. Bei diesen Verfahren entsteht ein Frequenz-Offset aufgrund einer möglichen Verstimmung des Oszillators 10. Diese äußert sich jedoch durch einen zusätzlichen Peak in der Nähe der Frequenz 0 und einen Versatz des von der Symbolrate verursachten Peaks 18. Dieser Frequenz-Versatz kann durch Detektion der Frequenz des zusätzlichen Peaks ermittelt werden und von der Frequenz des von der Symbolrate verursachten Peaks abgezogen werden. Alternativ kann die Bedienperson auch den Empfänger so verstimmen, daß der zweite Peak auf die Frequenzlage 0 verschoben wird.

Fig. 2, 3 und 4 zeigen alternative Ausführungsbeispiele der erfindungsgemäßen Vorrichtung zur Durchführung des erfindungsgemäßen Verfahrens. Dabei sind in allen Ausführungsbeispielen übereinstimmende Bezugszeichen verwendet, so daß sich insoweit eine wiederholende Beschreibung erübrigt.

Bei dem in Fig. 2 dargestellten Ausführungsbeispiel ist statt eines Spektrumanalysators 15 ein Analog/Digital-Wandler 20 vorhanden, dessen digitaler Ausgang mit einem üblichen Rechner 21 verbunden ist. Der Rechner 21 verfügt über ein Programm zur schnellen Fourier-Transformation (FFT, East Eourier Iransform), welches eine numerisch effiziente Berechnung des Spektrums 17 ermöglicht. Die Darstellung des Spektrums 17 erfolgt beispielsweise auf dem Display 16 des Rechners 21. Ferner kann eine Spitzenwert-Erfassungseinrichtung 22 vorhanden sein, die den Spitzenwert (Peak) 18 des Spektrums 17 automatisch erfaßt und ausgibt bzw. anzeigt. Die Spitzenwert-Erfassungseinrichtung 22 kann ein Bestandteil des in dem Rechner 21 geladenen Datenverarbeitungsprogramms sein.

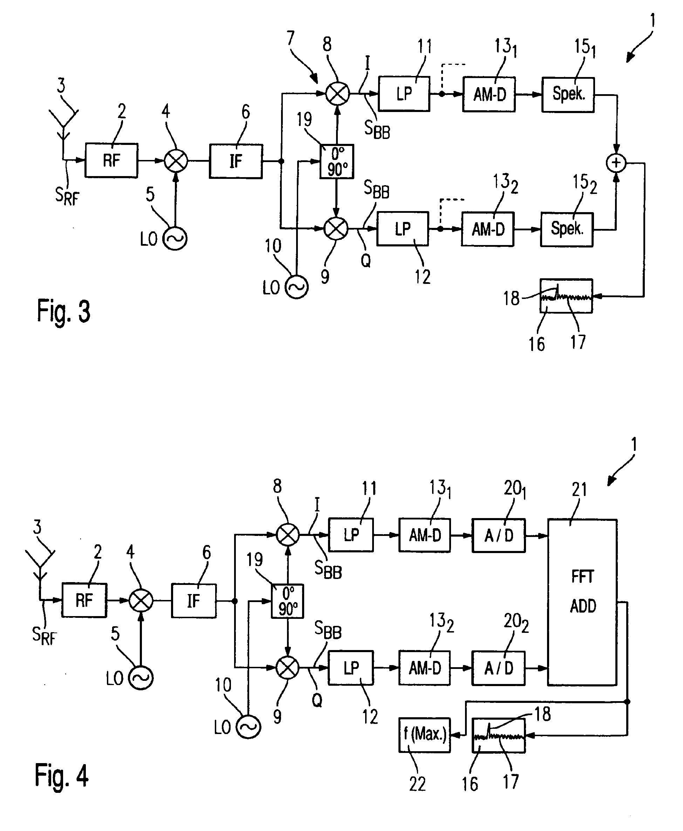

Bei dem in Fig. 3 dargestellten Ausführungsbeispiel wird sowohl die Inphase-Komponente I als auch die Quadraturphase-Komponente Q des Basisbandsignals S_{BB} ausgewertet. Dazu ist sowohl an dem I-Ausgang als auch an dem Q-Ausgang des I/Q-Demodulators 7 jeweils ein Amplituden-Demodulator 13₁ bzw. 13₂ angeschlossen, dem jeweils ein Spektrumanalysator 15₁ bzw. 15₂ nachgeschaltet ist. Die Spektren der beiden Spektrumanalysatoren 15₁ und 15₂ werden zur Verringerung des Signal/Rausch-Abstands addiert und das addierte Spektrum wird bezüglich des Spitzenwerts (Peaks) 18 ausgewertet. Natürlich kann auch ein einziger Spektrumanalysator verwendet werden, der die Abspeicherung mehrerer Spektren erlaubt, so daß das Spektrum der I-Komponente und der Q-Komponente nacheinander aufgenommen werden können und dann addiert werden können. Ferner ist es alternativ möglich, die Frequenzen der Peaks 18 der beiden Spektren 17 getrennt auszuwerten und zur Bestimmung der Symbolrate der Mittelwert der Frequenzen der beiden Peaks heranzuziehen.

Bei dem in Fig. 4 dargestellten Ausführungsbeispiel wird ebenfalls sowohl die Inphase-Komponente I als auch die Quadraturphase-Komponente Q des Basisbandsignals S_{BB} ausgewertet. Hierzu ist jeweils ein Amplituden-Demodulator 13₁ bzw. 13₂ mit dem I-Ausgang bzw. Q-Ausgang des I/Q-Demodulators 7 verbunden und beiden Amplituden-Demodulatoren 13₁ bzw. 13₂ ist jeweils ein Analog/Digital-Wandler 20₁ bzw. 20₂ nachgeschaltet, deren digitaler Ausgang mit dem Rechner 21 verbunden ist. Die für die I-Komponente und Q-Komponente getrennt erfaßten Spektren können in dem Rechner 21 zur Auswertung des Peaks 18 addiert werden. Auch hier kann die Frequenz des Peaks automatisch erfaßt werden.

Die Erfindung gestattet eine effiziente Bestimmung der Symbolrate auch bei niedrigem Signal/Rausch-Abstand mit niedrigem Zusatzaufwand. Bei Verwendung eines konventionellen Empfängers und eines konventionellen Spektrumanalysators bzw. Rechners mit üblicher Fourier-Transformation besteht der Zusatzaufwand lediglich in einem mit einer geringen Anzahl von Bauelementen realisierbaren passiven Amplituden-Demodulator.

## Patentansprüche

1. Verfahren zum Messen der Symbolrate eines digital modulierten Hochfrequenzsignals (S_{RF}) mit folgenden Verfahrensschritten:
- Erzeugen eines Basisbandsignals (S_{BB}) durch Demodulieren des Hochfrequenzsignals (S_{RF}), wobei die Demodulation des Hochfrequenzsignals (S_{RF}) phasenkohärent mittels eines I/Q-Demodulators (7) erfolgt, der eine phasenkohärente Inphase-Komponente (I) und eine phasenkohärente Quadraturphase-Komponente (Q) erzeugt und **gekennzeichnet durch**
- Erzeugen eines amplitudendemodulierten Signals (S_{ADM}) durch Amplitudendemodulieren des Basisbandsignals (S_{BB}) wobei sowohl die Inphase-Komponente (I) als auch die Quadraturphase-Komponente (Q) einer Amplitudendemodulation unterworfen wird;
- Ermitteln des Spektrums (17) des amplitudendemodulierten Basisbandsignals (S_{ADM}), wobei sowohl das Spektrum (17) der Inphase-Komponente (I) als auch das Spektrum (17) der Quadraturphase-Komponente (Q) ermittelt wird und beide Spektren addiert werden; und
- Erfassen der Frequenz (fₛ) eines Spitzenwerts (18) des **durch** Addition der Spektren der Inphase-Komponente und der Quadraturphase-Komponente erhaltenen Spektrums (17).

2. Verfahren nach Anspruch 1,
**dadurch gekennzeichnet,**
**daß** die Ermittlung des Spektrums (17) mittels eines Spektrumanalysators (15) erfolgt.

3. Verfahren nach einem Anspruch 1 oder 2,
**dadurch gekennzeichnet,**
**daß** die Ermittlung des Spektrums (17) mittels einer Fourier-Transformation (FFT) erfolgt.

4. Vorrichtung (1) zum Messen der Symbolrate eines digital modulierten Hochfrequenzsignals (S_{RF}) mit
einem Basisband-Demodulator (7), der das Hochfrequenzsignal (S_{RF}) demoduliert und ein Basisbandsignal (S_{BB}) erzeugt, wobei der Basisband-Demodulator (7) ein phasenkohärenter I/Q-Demodulator (7) ist, der eine phasenkohärente Inphase-Komponente (I) und eine phasenkohärente Quadraturphase-Komponente (Q) erzeugt und **gekennzeichnet durch**,
Amplitudendemodulatoren (13₁, 13₂), die jeweils ein amplitudendemoduliertes Signal (S_{AMD}) **durch** Amplitudendemodulieren des Basisbandsignals (S_{BB}) erzeugen, wobei sowohl für die Inphase-Komponente (I) als auch für die Quadraturphase-Komponente (Q) jeweils ein Amplituden-demodulator (13₁, 13₂) vorhanden ist;
eine Spektrumanalyseeinrichtung (15; 20-22), die das Spektrum (17) des amplitudendemodulierten Basisbandsignals (S_{BB}) analysiert und die Frequenz (fₛ) eines Spitzenwerts (Peaks) des Spektrums erfaßt und ausgibt wobei die Spektrumanalyseeinrichtung (15; 20-22) sowohl das Spektrum (17) der Inphase-Komponente (I) als auch das Spektrum der Quadraturphase-Komponente (Q) ermittelt und beide Spektren addiert und wobei die Spektrumanalyseeinrichtung (15; 20-22) eine Spitzenwert-Erfassungseinrichtung (22) aufweist, die einen Spitzenwert (18) des **durch** Addition erhaltenen Spektrums (17) erfaßt und dessen zugehörige Frequenz (fₛ) ausgibt.

5. Vorrichtung nach Anspruch 4,
**dadurch gekennzeichnet,**
**daß** die Spektrumanalyseeinrichtung (15; 20-22) zumindest einen Analog/Digital-Wandler (20) und einen Rechner (21), der eine Fourier-Transformation (FFT) durchführt, umfaßt.

## Claims

1. Method for measuring the symbol rate of a digitally-modulated high-frequency signal (S_{RF}) comprising the following procedural stages:
- generation of a baseband signal (S_{BB}) by demodulation of the high-frequency signal (S_{RF}), wherein the demodulation of the high-frequency signal (S_{RF}) is implemented in a phase-coherent manner by means of an I/Q demodulator (7), which generates a phase-coherent in-phase component (I) and a phase-coherent quadrature-phase component (Q), and
**characterised by**
- generation of an amplitude-demodulated signal (S_{AMD}) through amplitude-demodulation of the baseband signal (S_{BB}), wherein both the in-phase component (I) and also the quadrature-phase component (Q) are subjected to an amplitude-demodulation;
- determination of the spectrum (17) of the amplitude-demodulated baseband signal (S_{AMD}), wherein both the spectrum (17) of the in-phase component (I) and also the spectrum (17) of the quadrature-phase component (Q) are determined, and both spectra are added; and
- detection of the frequency (fₛ) of a peak value (18) of the spectrum (17) obtained by addition of the spectra of the in-phase component and the quadrature-phase component.

2. Method according to claim 1,
**characterised in that**
the determination of the spectrum (17) is implemented by means of a spectrum analyser (15).

3. Method according to any one of claims 1 or 2,
**characterised in that**
the determination of the spectrum (17) is implemented by means of a Fourier transform (FFT).

4. Device (1) for measuring the symbol rate of a digitally-modulated high-frequency signal (S_{RF}) comprising:
a baseband demodulator (7), which demodulates the high-frequency signal (S_{RF}) and generates a baseband signal (S_{BB}), wherein the baseband demodulator (7) is a phase-coherent demodulator (7), which generates a phase-coherent in-phase component (I) and a phase-coherent quadrature-phase component (Q) and
**characterised by**
amplitude-demodulators (13₁, 13₂), which each generate an amplitude-demodulated signal (S_{AMD}) by amplitude-demodulation of the baseband signal (S_{BB}), wherein an amplitude-demodulator (13₁, 13₂) is provided respectively both for the in-phase component (I) and also for the quadrature-phase component (Q);
a spectrum-analysis device (15; 20-22), which analyses the spectrum (17) of the amplitude-demodulated baseband signal (S_{BB}) and detects and outputs the frequency (fₛ) of a peak value (peak) of the spectrum, wherein the spectrum-analysis device (15; 20-22) determines both the spectrum (17) of the in-phase component (I) and also the spectrum of the quadrature-phase component (Q) and adds both spectra, and wherein the spectrum-analysis device (15; 20-22) provides a peak-detection device (22), which detects a peak value (18) of the spectrum (17) obtained through addition and outputs its associated frequency (fₛ).

5. Device according to claim 4,
**characterised in that**
the spectrum-analysis device (15; 20-22) comprises at least one analog/digital converter (20) and a computer (21), which implements a Fourier transform (FFT).

## Revendications

1. Procédé pour mesurer le débit de symboles d'un signal à fréquence élevée (S_{RF}) modulé numériquement comportant les étapes de procédé suivantes consistant à :
- générer un signal de bande de base (S_{BB}) par le biais d'une démodulation du signal à fréquence élevée (S_{RF}), la démodulation du signal à fréquence élevée (S_{RF}) étant effectuée avec cohérence de phase au moyen d'un démodulateur I/Q (7) qui génère une composante en phase (I) cohérente en phase et une composante en quadrature (Q) cohérente en phase et **caractérisé par** les étapes consistant à
- générer un signal démodulé en amplitude (S_{ADM}) par le biais d'une démodulation en amplitude du signal de bande de base (S_{BB}), étant aussi bien la composante en phase (I) que la composante en quadrature (Q) étant soumises à une démodulation d'amplitude ;
- déterminer le spectre (17) du signal de bande de base démodulé en amplitude (S_{ADM}), aussi bien le spectre (17) de la composante en phase (I) que le spectre (17) de la composante en quadrature (Q) étant déterminés et les deux spectres étant additionnés ; et
- détecter la fréquence (fₛ) d'une valeur de crête (18) du spectre (17) obtenu par addition du spectre de la composante en phase et du spectre de la composante en quadrature.

2. Procédé selon la revendication 1, **caractérisé en ce que**
le spectre (17) est déterminé au moyen d'un analyseur de spectres (15).

3. Procédé selon l'une des revendications 1 ou 2, **caractérisé en ce que**
le spectre (17) est déterminé au moyen d'une transformée de Fourier rapide (FFT).

4. Dispositif (1) pour mesurer le débit de symboles d'un signal à fréquence élevée (S_{RF}) modulé numériquement comportant
un démodulateur de bande de base (7), qui démodule le signal à fréquence élevée (S_{RF}) et génère un signal de bande de base (S_{BB}), le démodulateur de bande de base (7) étant un démodulateur I/Q à cohérence de phase (7) qui génère une composante en phase (I) cohérente en phase et une composante en quadrature (Q) cohérente en phase et **caractérisé par**
des démodulateurs d'amplitude (13₁, 13₂), qui génèrent chacun un signal démodulé en amplitude (S_{AMD}) par le biais d'une démodulation en amplitude du signal de bande de base (S_{BB}), un démodulateur d'amplitude (13₁,13₂) étant prévu à chaque fois aussi bien pour la composante en phase (I) que pour la composante en quadrature (Q) ;
un dispositif d'analyse de spectres (15; 20 à 22), qui analyse le spectre (17) du signal de bande de base (S_{BB}) démodulé en amplitude et détermine et délivre en sortie la fréquence (fₛ) d'une valeur de crête du spectre, le dispositif d'analyse de spectres (15; 20 à 22) déterminant aussi bien le spectre (17) de la composante en phase (I) que le spectre de la composante en quadrature (Q) et additionnant les deux spectres, et le dispositif d'analyse de spectres (15; 20 à 22) comportant un dispositif de détection de valeur de crête (22) qui détecte une valeur de crête (18) du spectre (17) obtenu par addition et délivre en sortie la fréquence (fₛ).

5. Dispositif selon la revendication 4, **caractérisé en ce que**
le dispositif d'analyse de spectres (15; 20 à 22) comporte au moins un convertisseur analogique numérique (20) et un calculateur (21) qui exécute une transformée de Fourier rapide (FFT).
